# EUROPEAN PATENT APPLICATION

(11) **EP 4 438 645 A1**
(43) Date of publication of application: **02.10.2024**
(21) Application number: 22898424.1
(22) Date of filing: 11.11.2022
(51) Int. Cl.: C08G 8/04, C08J 5/04

(54) **PHENOLIC RESIN COMPOSITION AND ARTICLE**

(30) Priority: 25.11.2021 JP 2021190874
(71) Applicant: Sumitomo Bakelite Co., Ltd., Shinagawa-ku Tokyo 140-0002 (JP)
(72) Inventor: SUZUKI, Yuji, Tokyo 140-0002 (JP)
(74) Representative: Ter Meer Steinmeister & Partner
(86) International application number: PCT/JP2022/042047
(87) International publication number: WO 2023/095640

(57) **Abstract**

Provided is a phenolic resin composition which is a liquid and is used for impregnating or coating an organic fiber base material, in which the phenolic resin composition is obtained through a step of reacting phenols and aldehydes, which are starting substances, in a presence of a basic catalyst under a condition that a molar ratio of [aldehydes]/[phenols] is 0.8 or more and 3.0 or less, to obtain a resol-type phenolic resin, and a step of adding glycine to the resol-type phenolic resin in an amount of 0.01 mol or more and less than 1.0 mol with respect to 1 mol of the phenols as the starting substance, to obtain the phenolic resin composition.

## Description

### TECHNICAL FIELD

The present invention relates to a phenolic resin composition used by being impregnated in a fiber base material, and an article using the same.

### BACKGROUND ART

A phenolic resin has excellent characteristics such as heat resistance, mechanical characteristics, and low price, and is thus used as a binder for a filter, a laminated plate, a friction material, and the like. These products are produced by impregnating a fiber base material with a phenolic resin diluted with a solvent such as methanol and acetone, drying the fiber base material at room temperature, and thermosetting the fiber base material. As the phenolic resin, in a case where ammonia-free or solvent-free is required for environmental friendliness and work environment improvement, the resol-type phenolic resin, which is highly hydrophilic, is used for applications used in a form of aqueous solution or emulsion. The water-soluble resol resin has excellent abrasive grain retention and heat resistance, and is used, for example, as a binder for abrasive cloth paper.

However, the resol-type phenolic resin contains unreacted phenols and aldehydes, which are undesirable substances from the viewpoint of protecting atmospheric environment and protecting human environment. In order to obtain a resol-type phenolic resin with a reduced formaldehyde content, it is sufficient to react an excessive amount of phenols with aldehydes. However, since the resol-type phenolic resin obtained by using the excessive amount of phenols contains a large amount of unreacted phenols, the resol-type phenolic resin is poorly cured, and in a cured product to be obtained, mechanical strength which is required by the market is not satisfied. In addition, since the resol-type phenolic resin obtained by using the excessive amount of phenols with respect to aldehydes contains a large amount of unreacted phenols, it is not preferable to use the resol-type phenolic resin in environmental and occupational safety.

As a technique for solving the above-described problem, Patent Document 1 discloses a method for producing a resol resin, in which amounts of unreacted monomers such as formaldehyde and phenol can be reduced, and a resin composition for sizing mineral fibers, which contains the resol resin. Patent Document 1 discloses a method for producing a liquid resin exhibiting a free phenol level of 0.5% or less, by blending 0.1 to 0.5 mol of glycine per 1 mol of a starting phenol in a phenol-formaldehyde condensate.

### RELATED DOCUMENT

### PATENT DOCUMENT

[Patent Document 1] Japanese Patent No. 6001536

### SUMMARY OF THE INVENTION

### TECHNICAL PROBLEM

The present inventors found that the resin composition of Patent Document 1 is not impregnated into fine gaps in work such as the impregnation into the fiber base material, and thus may cause poor impregnation or poor curing, and a strength after curing may not be sufficiently obtained.

The present invention has been made in view of the above-described problems, and an object of the present invention is to obtain a resin composition which can be uniformly applied and impregnated into a fiber base material and from which a cured product having excellent mechanical strength can be obtained.

### SOLUTION TO PROBLEM

According to the present invention, there is provided a phenolic resin composition which is a liquid and is used for impregnating or coating an organic fiber base material, in which the phenolic resin composition is obtained through a step of reacting phenols and aldehydes, which are starting substances, in a presence of a basic catalyst under a condition that a molar ratio of [aldehydes]/[phenols] is 0.8 or more and 3.0 or less, to obtain a resol-type phenolic resin, and a step of adding glycine to the resol-type phenolic resin in an amount of 0.01 mol or more and less than 1.0 mol with respect to 1 mol of the phenols as the starting substance, to obtain the phenolic resin composition.

In addition, according to the present invention, there is provided an article including an organic fiber base material and the above-described phenolic resin composition, in which the organic fiber base material is impregnated or coated with the phenolic resin composition.

In addition, according to the present invention, there is provided a phenolic resin composition which is a liquid and is used for impregnating or coating a woven fabric base material, in which an air permeability of the woven fabric material is 250 cm³/cm²/s or less, and the phenolic resin composition is obtained through a step of reacting phenols and aldehydes, which are starting substances, in a presence of a basic catalyst under a condition that a molar ratio of [aldehydes]/[phenols] is 0.8 or more and 3.0 or less, to obtain a resol-type phenolic resin, and a step of adding glycine to the resol-type phenolic resin in an amount of 0.01 mol or more and less than 1.0 mol with respect to 1 mol of the phenols as the starting substance, to obtain the phenolic resin composition.

In addition, according to the present invention, there is provided an article including a woven fabric base material and the above-described phenolic resin composition, in which the woven fabric base material is impregnated or coated with the phenolic resin composition.

### ADVANTAGEOUS EFFECTS OF INVENTION

According to the present invention, there are provided a phenolic resin composition which has excellent impregnation property with respect to a fiber base material and in which a cured product thereof has high mechanical strength, and an article obtained by impregnating a fiber base material with the phenolic resin composition.

### DESCRIPTION OF EMBODIMENTS

Hereinafter, embodiments of the present invention will be described.

### [Phenolic resin composition]

The phenolic resin composition according to the embodiment of the present invention is a phenolic resin composition for impregnation, which is used for impregnating or coating an organic fiber base material or a woven fabric base material. The phenolic resin composition according to the embodiment of the present invention contains a water-soluble resol-type phenolic resin and glycine. The phenolic resin composition according to the embodiment of the present invention is obtained through a step of reacting phenols and aldehydes, which are starting substances, in the presence of a basic catalyst under a condition that a molar ratio of [aldehydes]/[phenols] is 0.8 or more and 3.0 or less, to obtain a water-soluble resol-type phenolic resin, and
a step of adding glycine to the resol-type phenolic resin in an amount of 0.01 mol or more and less than 1.0 mol with respect to 1 mol of the phenols as the starting substance.

By producing the phenolic resin composition according to the embodiment of the present invention with the above-described method, an increase in molecular weight of the resol-type phenolic resin contained in the phenolic resin composition is appropriately suppressed, and the phenolic resin composition containing the resol-type phenolic resin has a viscosity suitable for impregnating the fiber base material. As a result, the phenolic resin composition has excellent impregnation property and coating property with respect to the fiber base material such as an organic fiber base material and a woven fabric base material.

Here, favorable impregnation property and coating property as referred to in the present invention mean that the phenolic resin composition enters (permeates) almost all spaces between fibers constituting the fiber base material, not only a surface of the fiber base material, the resol-type phenolic resin contained in the phenolic resin composition remains on the surface of the fibers, and the phenolic resin composition is present uniformly without concentration bias in a thickness direction of the fiber base material.

Since the phenolic resin composition according to the embodiment of the present invention has favorable impregnation property and coating property with respect to the fiber base material, an article obtained by curing the phenolic resin composition impregnated into the fiber base material has high mechanical strength.

The phenolic resin composition according to the embodiment of the present invention contains a water-soluble resol-type phenolic resin and glycine, which are produced by the above-described method. Since the phenolic resin composition according to the embodiment of the present invention contains glycine, amounts of free aldehyde and free phenol, which are unreacted residual monomers inevitably contained in the water-soluble resol-type phenolic resin, are reduced. Therefore, environmental load and load on the human body are reduced. It is not always clear why the glycine reduces the amounts of free aldehyde and free phenol, but it is considered that, by reacting or interacting the glycine with the free aldehyde and the free phenol in the phenolic resin composition, these free aldehyde and free phenol exist as inactive compounds.

In addition, since the phenolic resin composition according to the embodiment of the present invention contains the glycine, stability over time of the phenolic resin composition is improved. Here, the stability over time of the resin composition refers to that characteristics of the resin composition change little over time. The change in characteristics of the resin composition over time includes an increase in molecular weight of the phenolic resin contained in the resin composition and an increase in viscosity of the resin composition. Since the phenolic resin composition according to the embodiment of the present invention maintains its pH within a predetermined range due to buffering action of the glycine, the increase in molecular weight of the resol-type phenolic resin contained in the resin composition, or further polymerization reaction between unreacted free formaldehydes and free phenols are inhibited. Therefore, little or no increase in viscosity of the phenolic resin and changes in properties of the resin composition occur.

The phenolic resin composition according to the embodiment of the present invention contains a water-soluble resol-type phenolic resin, in which the water-soluble resol-type phenolic resin is a resol-type phenolic resin obtained through a step of reacting phenols and aldehydes, which are starting substances, in the presence of a basic catalyst under a condition that a molar ratio of [aldehydes]/[phenols] is 0.8 or more and 3.0 or less. The resol-type phenolic resin produced under the above-described condition has high water solubility, and thus the resin composition containing the resol-type phenolic resin has excellent handleability.

In the phenolic resin composition according to the embodiment of the present invention, the glycine is used in an amount of 0.01 mol or more and less than 1.0 mol with respect to 1 mol of the phenols as the starting substance used in the production of the resol-type phenolic resin. The lower limit value of the amount of the glycine used is preferably 0.05 mol or more and more preferably 0.08 mol or more with respect to 1 mol of the phenols as the starting substance used in the production of the resol-type phenolic resin. The upper limit value of the amount of the glycine used is preferably 0.98 mol or less, more preferably 0.95 mol or less, still more preferably 0.9 mol or less, even more preferably 0.8 mol or less, even still more preferably 0.7 mol or less, further more preferably 0.6 mol or less, particularly preferably 0.5 mol or less, and more particularly preferably 0.4 mol or less with respect to 1 mol of the phenols as the starting substance used in the production of the resol-type phenolic resin.

In the phenolic resin composition according to the embodiment of the present invention, contents of free phenol and free aldehyde are reduced by using the glycine in an amount within the above-described range. Therefore, the phenolic resin composition according to the embodiment of the present invention is inexpensive because production cost is reduced.

### (Method for producing phenolic resin composition)

The phenolic resin composition according to the embodiment of the present invention, containing a water-soluble resol-type phenolic resin and glycine, is obtained through the following (Step I) and (Step II) .

(Step I) step of reacting phenols and aldehydes, which are starting substances, in the presence of a basic catalyst under a condition that a molar ratio of [aldehydes]/[phenols] is 0.8 or more and 3.0 or less, to obtain a water-soluble resol-type phenolic resin

(Step II) step of adding glycine to the reaction mixture containing the resol-type phenolic resin obtained in (Step I) in an amount of 0.01 mol or more and less than 1.0 mol with respect to 1 mol of the phenols as the starting substance used in the step I

Examples of the phenols as the starting substance, which are used for the synthesis of the water-soluble resol-type phenolic resin in (Step I), include phenol; cresols such as o-cresol, m-cresol, and p-cresol; ethylphenols such as o-ethylphenol, m-ethylphenol, and p-ethylphenol; butylphenols such as isopropylphenol, butylphenol, and p-tert-butylphenol; alkylphenols such as p-tert-amylphenol, p-octylphenol, p-nonylphenol, and p-cumylphenol; halogenated phenols such as fluorophenol, chlorophenol, bromophenol, and iodophenol; monovalent phenol substitutions such as p-phenylphenol, aminophenol, nitrophenol, dinitrophenol, and trinitrophenol; monovalent phenols such as 1-naphthol and 2-naphthol; and polyvalent phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalin. These may be used alone or in combination of two or more thereof.

Examples of the aldehydes as the starting substance, which are used for the synthesis of the water-soluble resol-type phenolic resin in (Step I), include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, and salicylaldehyde. These may be used alone or in combination of two or more thereof. In addition, it is also possible to use precursors of these aldehydes or solutions of these aldehydes. Among these, from the viewpoint of production cost, it is preferable to use an aqueous solution of formaldehyde.

Examples of the basic catalyst used for the synthesis of the water-soluble resol-type phenolic resin in (Step I) include hydroxides of alkali metals or alkaline earth metals such as sodium hydroxide, potassium hydroxide, and calcium hydroxide; carbonates such as sodium carbonate and calcium carbonate; oxides such as lime; sulfites such as sodium sulfite; phosphates such as sodium phosphate; and amines such as ammonia, trimethylamine, triethylamine, monoethanolamine, diethanolamine, triethanolamine, hexamethylenetetramine, and pyridine.

Water is used as a reaction solvent used for the synthesis of the water-soluble resol-type phenolic resin in (Step I). By carrying out the reaction of (Step I) in an aqueous solvent, in the subsequent (Step II), the addition of water-soluble glycine is facilitated.

In (Step I), the reaction is carried out by charging the phenols and the aldehydes into a reaction kettle in a blending molar ratio (F/P) of the phenols (P) and the aldehydes (F) is 0.8 or more, preferably 0.8 or more and 3.0 or less, more preferably 1.0 or more and 2.8 or less, and still more preferably 1.2 or more and 2.5 or less, adding the above-described basic catalyst as a polymerization catalyst, and refluxing the mixture for an appropriate time (for example, 3 to 6 hours). In a case where the blending molar ratio (F/P) of the phenols (P) and the aldehydes (F) is less than 0.8, a weight-average molecular weight of the water-soluble resol-type phenolic resin produced is small, so that the water-soluble resol-type phenolic resin may have insufficient coating property to the fiber base material or may not have desired characteristics such as mechanical strength and heat resistance. In addition, in a case where the blending molar ratio (F/P) of the phenols (P) and the aldehydes (F) is more than 3.0, since gelation of the resin tends to proceed during the reaction, reaction efficiency is lowered, and a water-insoluble high-molecular-weight resol-type phenolic resin is produced, which is not preferable. A reaction temperature is, for example, 40°C to 120°C, preferably 60°C to 100°C. As a result, the gelation can be suppressed and a water-soluble resol-type phenolic resin having a target molecular weight can be obtained. The weight-average molecular weight of the water-soluble resol-type phenolic resin is preferably 250 to 3,000, and more preferably 300 to 2,000. The resol-type phenolic resin having a molecular weight within the above-described range has water solubility and has excellent impregnation property and coating property with respect to the fiber base material.

The basic catalyst used in (Step I) is used in an amount of, for example, 1 to 10 mass%, preferably 1 to 8 mass% and more preferably 2 to 5 mass% with respect to the phenols as the starting substance. By using the basic catalyst in an amount within the above-described range, the reaction efficiency between the phenols and the aldehydes can be improved, and thus the amounts of phenols and aldehydes remaining as unreacted products can be reduced.

Next, (Step II) is performed following (Step I). In (Step II), glycine is added to the reaction mixture containing the resol-type phenolic resin obtained in (Step I) in an amount of 0.01 mol or more and less than 1.0 mol with respect 1 mol of to the phenols as the starting substance used in (Step I). The lower limit value of the added amount of glycine is preferably 0.05 mol or more, and more preferably 0.08 mol or more with respect to 1 mol of the phenols as the starting substance used in (step I). The upper limit value of the added amount of glycine is preferably 0.98 mol or less, more preferably 0.95 mol or less, still more preferably 0.9 mol or less, even more preferably 0.8 mol or less, even still more preferably 0.7 mol or less, further more preferably 0.6 mol or less, particularly preferably 0.5 mol or less, and more particularly preferably 0.4 mol or less with respect to 1 mol of the phenols as the starting substance used in (step I).

By adding the glycine in an amount within the above-described range, the impregnation property and the coating property of the obtained resol-type phenolic resin composition with respect to the fiber base material can be set to an appropriate range. In addition, by adding the glycine in an amount within the above-described range, the amounts of free aldehydes and free phenols remaining unreacted in (Step I) can be reduced.

In (Step II), it is preferable that the glycine is added to the reaction mixture obtained in (Step I) gradually over a given time. It is preferable that the addition of glycine is carried out at a temperature of 60°C to 75°C, preferably 60°C to 65°C, at an addition rate of, per 1 minute, 0.5 to 20 mass%, preferably 1 to 10 mass% and more preferably 2.8 mass% to 4 mass%, of the total amount of the glycine. Here, the glycine may be used in a form of an aqueous solution. Alternatively, the glycine may be used in a form of a metal salt such as a sodium salt.

After the addition of glycine, the temperature is preferably kept constant for an additional 10 to 180 minutes, preferably 30 to 100 minutes, to further reduce the unreacted free aldehydes and free phenols. Thereafter, the temperature of the reaction mixture is slowly cooled to approximately room temperature, thereby obtaining the phenolic resin composition according to the embodiment of the present invention.

In the phenolic resin composition obtained through the above-described steps, a content of unreacted free phenols is reduced to 1 mass% or less, preferably 0.8 mass% and more preferably 0.6 mass% with respect to the entire phenolic resin composition.

In addition, in the phenolic resin composition obtained through the above-described steps, a content of unreacted free aldehydes is reduced to 1 mass% or less, preferably 0.8 mass% or less and more preferably 0.6 mass% or less with respect to the entire phenolic resin composition.

The pH of the phenolic resin composition obtained through the above-described steps is close to neutral, for example, 6 to 8, preferably 6.5 to 7.8 and more preferably 6.8 to 7.5. Such pH is achieved by the presence of glycine in the resin composition. The phenolic resin composition according to the embodiment of the present invention has excellent stability over time by having a pH within the above-described range.

### [Article]

The article according to the present embodiment is obtained by impregnating a fiber base material with the above-described phenolic resin composition described above, and curing the impregnated fiber base material. As the fiber base material, an organic fiber base material or a woven fabric base material is used. Examples of the organic fiber base material include natural fiber base materials such as wood pulp, linter pulp, cotton linter, paper, kenaf, jute, and bamboo; and organic synthetic fibers such as aramid fiber, polyester fiber, polybenzazole fiber, acrylic fiber, acrylonitrile fiber, polyimide fiber, and polyamide fiber. These organic fiber base materials may be used alone or in a mixture of two or more kinds thereof.

In addition, as the woven fabric base material, a woven fabric having an air permeability of 250 cm³/cm²/s or less, preferably 220 cm³/cm²/s or less, is used. As the woven fabric base material, specifically, a glass fiber, a metal fiber, or a ceramic fiber is used.

A usage proportion of the fiber base material and the above-described phenolic resin composition according to the embodiment of the present invention is preferably [solid content of the phenolic resin composition]/[fiber base material] = 10/100 to 50/100 on a mass basis.

In addition, the fiber base material may contain an additive. Examples of the additive include wollastonite, kaolin, silica, barium sulfate, calcium carbonate, silicon oxide, cashew dust, graphite, and the like, which are generally known as a reinforcing material or a filler. These reinforcing materials or fillers are not particularly limited, and two or more kinds thereof can be used in combination.

The article according to the present embodiment can be used as, for example, a friction material.

The embodiments of the present invention have been described above, but these are examples of the present invention and various configurations other than the above can be adopted.

### EXAMPLES

Hereinafter, the present invention will be described with reference to Examples and Comparative Examples, but the present invention is not limited thereto.

### (Example 1)

Into a reaction device with a stirrer, a reflux condenser, and a thermometer, 1000 parts by weight of phenol, 2070 parts by weight of 37% formalin aqueous solution (F/P molar ratio = 2.4), and 30 parts by weight of sodium hydroxide were charged, and the mixture was reacted at 90°C for 70 minutes. After adding 500 parts by weight of water thereto, 80 g of glycine (0.1 mol with respect to 1 mol of the phenol) was added thereto at 60°C, and dissolved to obtain a resin composition. The obtained resin composition was transparent, had a solid content of 50%, and had a water dilutability of more than 2000% at 25°C.

In the resin composition, an amount of unreacted (free) phenols was 0.6 mass%, and an amount of unreacted (free) formaldehydes was 0.8 mass%, which were measured by gas chromatography.

### (Example 2)

A resin composition was obtained in the same manner as in Example 1, except that 1876 parts by weight (F/P molar ratio = 2.175) of a 37% formalin aqueous solution was used with respect to 1000 parts by weight of the phenol.

### (Example 3)

A resin composition was obtained in the same manner as in Example 1, except that 1898 parts by weight of a 37% formalin aqueous solution (F/P molar ratio = 2.4) was used with respect to 1000 parts by weight of phenol, and 240 g of glycine (0.3 mol with respect to phenol) was used.

### (Example 4)

A resin composition was obtained in the same manner as in Example 1, except that 2156 parts by weight of a 37% formalin aqueous solution (F/P molar ratio = 2.5) was used with respect to 1000 parts by weight of phenol, and 240 g of glycine (0.3 mol with respect to phenol) was used.

### (Example 5)

A resin composition was obtained in the same manner as in Example 1, except that 640 g of glycine (0.8 mol with respect to phenol) was used.

### (Example 6)

A resin composition was obtained in the same manner as in Example 1, except that 1898 parts by weight of a 37% formalin aqueous solution (F/P molar ratio = 2.4) was used with respect to 1000 parts by weight of phenol, and 40 g of glycine (0.05 mol with respect to phenol) was used.

### (Comparative Example 1)

A resin composition was obtained in the same manner as in Example 1, except that 1888 parts by weight of a 37% formalin aqueous solution (F/P molar ratio = 2.19) was used with respect to 1000 parts by weight of phenol, and glycine was not used.

### (Comparative Example 2)

4000 ml of water was added to the resin composition obtained in Comparative Example 1 to obtain a resin composition.

A resin composition was obtained in the same manner as in Example 1, except that 1121 parts by weight of a 37% formalin aqueous solution (F/P molar ratio = 1.3) was used with respect to 1000 parts by weight of phenol, and glycine was not used.

Table 1 shows the solid content (non-volatile content) (%), the amount of free phenol, the amount of free formaldehyde, and the water dilutability of the resin compositions obtained in each of Examples and Comparative Examples.

### (Measurement of viscosity of resin composition)

A viscosity of the above-described resin composition immediately after preparation was measured. The viscosity was measured according to 5.3.2 viscosity B method of JIS-K-6910 "phenolic resin test method". The results are shown in Table 1.

### (Physical property evaluation of resin composite)

### (Resin adhesion amount of impregnated paper)

The obtained resin composition was impregnated into a filter paper (cellulose filter paper base material with 120 mm × 10 mm × 1 mm in thickness), and then dried and cured in an oven at 200°C for 30 minutes to obtain a composite.

A resin adhesion amount was calculated according to the following expression. Resin adhesion amount (%) = [(Weight of composite - Weight of base material)/(Weight of base material)] × 100

### (Strength of impregnated paper)

A strength of the impregnated paper was measured at normal temperature and normal pressure with a test speed of 1 mm/min using a precision universal testing machine AG-IS 5 kN (manufactured by Shimadzu Corporation) according to JIS P 8113.

### [Table 1]

**Table.1**

| <Production conditions of resin composition> | Unit | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| F/P molar ratio | - | 2.4 | 2.175 | 2.2 | 2.5 | 2.4 | 2.2 | 2.19 | 2.19 | 1.3 |
| Amount of glycine | mol (with respect to 1 mol of raw material phenol) | 0.1 | 0.1 | 0.3 | 0.3 | 0.8 | 0.05 | - | - | - |
| <Physical properties of resin composition> | | | | | | | | | | |
| Amount of free formaldehyde | wt% | 0.8 | 0.08 | 0.03 | 0.09 | 0.2 | 0.8 | 0.08 | 0.04 | 0.5 |
| Amount of free phenol | wt% | 0.6 | 0.07 | 0.4 | 0.27 | 0.2 | 0.9 | 0.01 | 0.01 | 8.5 |
| Water dilutability | % | > 2000 | > 2000 | > 2000 | > 2000 | > 2000 | > 2000 | > 2000 | > 2000 | 600 |
| Viscosity | mPas | 25 | 69 | 20 | 66 | 50 | 55 | 630 | 45 | 20 |
| Non-volatile content | % | 50 | 41 | 50 | 56 | 52 | 51 | 48 | 20 | 50 |
| <Physical property evaluation of resin composited | | | | | | | | | | |
| Resin adhesion amount of impregnated paper | % | 40 | 42 | 40 | 41 | 40 | 41 | 88 | 26 | 40 |
| Strength of impregnated paper | MPa | 10.3 | 13.3 | 10.1 | 11.9 | 11.9 | 11.2 | 13.4 | 2.2 | 8.4 |

Priority is claimed on Japanese Patent Application No. 2021-190874, filed on November 25, 2021, the disclosure of which is incorporated herein by reference.

## Claims

1. A phenolic resin composition which is a liquid and is used for impregnating or coating an organic fiber base material,
wherein the phenolic resin composition is obtained through a step of reacting phenols and aldehydes, which are starting substances, in a presence of a basic catalyst under a condition that a molar ratio of [aldehydes]/[phenols] is 0.8 or more and 3.0 or less, to obtain a resol-type phenolic resin, and a step of adding glycine to the resol-type phenolic resin in an amount of 0.01 mol or more and less than 1.0 mol with respect to 1 mol of the phenols as the starting substance, to obtain the phenolic resin composition.

2. The phenolic resin composition according to claim 1,
wherein the organic fiber base material is a natural fiber base material, an organic synthetic fiber base material, or a combination of these fiber base materials.

3. An article comprising:
an organic fiber base material; and
the phenolic resin composition according to claim 1 or 2,
wherein the organic fiber base material is impregnated or coated with the phenolic resin composition.

4. A phenolic resin composition which is a liquid and is used for impregnating or coating a woven fabric base material,
wherein an air permeability of the woven fabric base material is 250 cm³/cm²/s or less, and
the phenolic resin composition is obtained through a step of reacting phenols and aldehydes, which are starting substances, in a presence of a basic catalyst under a condition that a molar ratio of [aldehydes]/[phenols] is 0.8 or more and 3.0 or less, to obtain a resol-type phenolic resin, and a step of adding glycine to the resol-type phenolic resin in an amount of 0.01 mol or more and less than 1.0 mol with respect to 1 mol of the phenols as the starting substance, to obtain the phenolic resin composition.

5. The phenolic resin composition according to claim 4,
wherein the woven fabric base material is a glass fiber, a metal fiber, or a ceramic fiber.

6. An article comprising:
a woven fabric base material; and
the phenolic resin composition according to claim 4 or 5,
wherein the woven fabric base material is impregnated or coated with the phenolic resin composition.
